## Europäisches Patentamt
## European Patent Office
## Office européen des brevets

(11) Numéro de publication: **0 238 373**
**B1**

(12) **FASCICULE DE BREVET EUROPEEN**

(19)

(45) Date de publication du fascicule du brevet:
02.05.90

(51) Int. Cl.⁴: **B23Q 3/12**

(21) Numéro de dépôt: **87400289.2**

(22) Date de dépôt: **09.02.87**

(54) Système d'échange sur un centre d'usinage non amovible.

(30) Priorité: **06.03.86 FR 8603131**

(43) Date de publication de la demande:
**23.09.87 Bulletin 87/39**

(45) Mention de la délivrance du brevet:
**02.05.90 Bulletin 90/18**

(84) Etats contractants désignés:
**AT CH DE GB IT LI SE**

(56) Documents cités:
- **DE-A- 1 602 774**
  **DE-A- 2 061 028**
  **DE-A- 3 045 536**
  **DE-C- 724 892**

(73) Titulaire: **SANDVIK-TOBLER S.A., 4, Avenue de la Vieille France, F-95380 Louvres(FR)**

(72) Inventeur: **Barbieux, Jacques, 20, Avenue Beauséjour, F-95380 Louvres(FR)**

(74) Mandataire: **Morash, Daniel, 17, Avenue La Bruyère, F-78160 Marly-le-Roi(FR)**

ACTORUM AG

## Description

La présente invention concerne un système d'échange sur un centre d'usinage non amovible, tel qu'une broche d'une machine d'usinage, des dispositifs amovibles tels que des mandrins de serrage, des porte-outils et similaires.

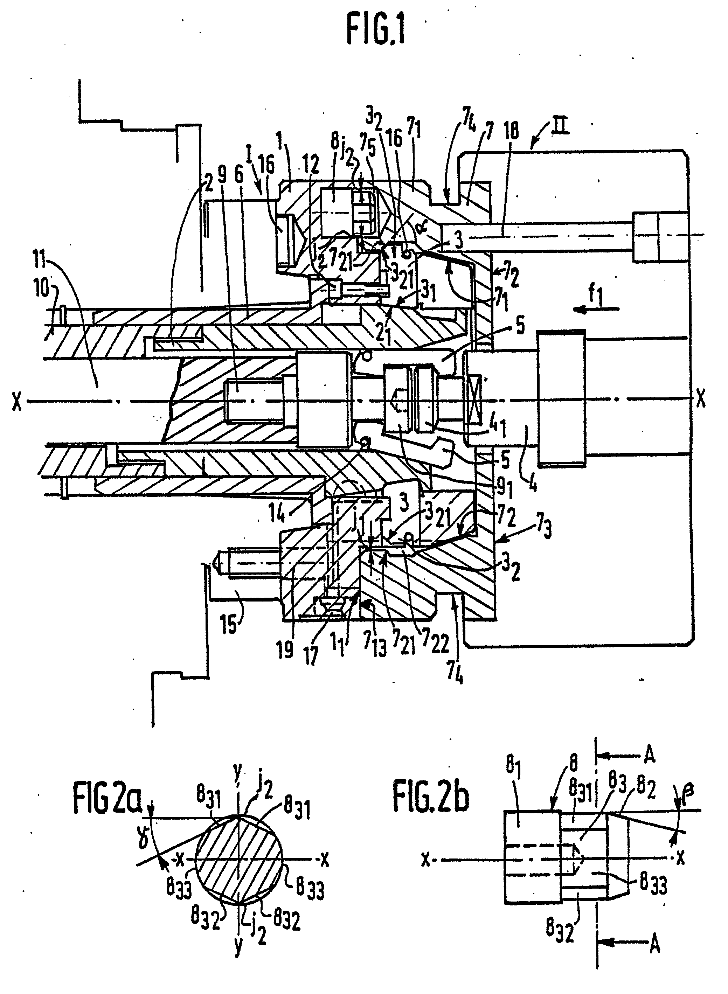

Dans les systèmes connus tels que décrits dans la demande de brevet allemand publiée DE-A 3 045 536 (BLESSING) par exemple, le dispositif de serrage en position de montage, montré dans la figure 1, par exemple, relié au centre d'usinage par un assemblage comprenant une bride (ou un plateau intermédiaire) appelée «bride de centrage» par BLESSING et un manchon appelé «machon de centrage» dans cette demande de brevet allemand qui est en contact direct avec un plateau – appelé «bride intermédiaire» dans cette demande de brevet – dans lequel sont usinés les passages-guides pour les coulisseaux assurant le montage dudit manchon sur ledit plateau qui est monté fixe sur le plateau d'extrémité de l'arbre d'une machine-outil tournante. Le dispositif de serrage est actionné par une tige de commande (non référencée) après que celle-ci a été accrochée audit dispositif de serrage par des billes (non référencées). Le décrochage dudit dispositif de serrage est commandé par un piston annulaire (non référencé) concentrique à ladite tige de commande et pouvant se déplacer avec celle-ci dans le sens longitudinal _après_ l'opération d'accrochage d'une part, et l'accrochage et l'actionnement de ce dispositif de serrage sont donc commandés par au moins trois organes différents.

Dans cette demande de brevet allemand (BLESSING) il semble que, après l'opération de verrouillage, un faible jeu radial subsiste entre les faces supérieures des douilles et la rainure annulaire pratiquée dans le manchon pour y loger les extrémités des douilles.

Cet examen de ladite demande de brevet allemand permet de constater:

(i) le centrage précis du dispositif de serrage sur le centre d'usinage semble fortement compromis, sinon impossible; en effet, le jeu sus-mentionné ne peut être qu'un jeu de montage; il faut donc prévoir un usinage de très grande précision des pièces, et de la bride dite »de centrage« pour obtenir un centrage convenable aussi longtemps qu'il n'y a pas d'usure de fonctionnement.

ii) le verrouillage ne semble pas être irréversible; pour assurer l'irréversibilité il faut que les angles d'inclinaison des faces coniques des extrémités supérieures des douilles, ainsi que les angles d'inclinaison de la partie conique de la tige ne dépassent pas des valeurs supérieures et inférieures bien précises; et rien de tel n'est prévu dans la demande du brevet allemand.

(iii) Comme c'est déjà mentionné plus haut, l'opération d'accrochage du dispositif de serrage et son actionnement sont effectués par deux organes différents nécessitant au moins une troisième fonction du cylindre de commande.

La présente demande remédie à ces inconvénients précités. Elle assure, en toutes circonstances un centrage précis; elle permet le verrouillage (pneumatique, par exemple) simplifié n'ayant que deux fonctions, donc seulement deux pistons.

Conformément à la présente invention, le système d'échange sur un centre d'usinage non amovible des dispositifs amovibles de serrage et/ou de maintien amovibles, tels que des mandrins, porte-outils et similaires, comprend:
– un plateau d'adaptation pour être fixé sur ledit centre d'usinage,
– une cassette pour être fixée sur ledit dispositif amovible dont le côté intérieur présente une face inclinée par rapport à l'axe longitudinal (x–x) du système,
– au moins un organe de blocage avec une face inclinée correspondant à ladite face inclinée de la cassette, chaque organe de blocage étant déplaçable radialement à partir d'une position neutre vers la position de blocage lors de l'opération de montage et de verrouillage dudit dispositif amovible sur ledit centre d'usinage,
– des mors servant pour le verrouillage et déverrouillage de la tête, des moyens de commande de serrage et de desserrage dudit dispositif amovible avec la tête d'un tirant dudit centre d'usinage,
– un piston annulaire étant pourvu sur sa face extérieure et sur sa face intérieure respectivement d'une partie conique pour verrouiller et déverrouiller lors de son déplacement axial respectivement simultanément lesdites têtes par l'intermédiaire desdits mors d'une part, et ladite cassette et le plateau d'adaptation par l'intermédiaire du ou desdits organe (s) déplaçables radialement d'autre part,
– des moyens de contrôle du contact intime et régulier entre lesdites faces inclinées du ou desdits organe(s) de blocage et de ladite cassette étant prévus pour l'action de blocage.

L'inclinaison de la totalité desdites faces est identique.

Ladite inclinaison est de 40° à 50°.

Un jeu existe lors du montage de l'ensemble; cassette et dispositif amovible sur/ou dans ledit centre d'usinage et subsiste après le blocage par lesdits organes, assurant ainsi le montage facile dudit ensemble sur/ou dans ledit centre d'usinage et, en position de blocage, le placage et le centrage précis de ladite cassette sur ledit centre d'usinage.

Ledit jeu est 0,5 à 1,0 mm au diamètre intérieur de la cassette.

La précision dudit placage et centrage de la cassette sur/ou dans ledit centre d'usinage, en position de blocage, est 0,007 à 0,011 mm par rapport à l'axe longitudinal X–X de la face de la cassette et son diamètre extérieur.

La face de la cassette destinée à être en contact avec le dispositif amovible n'est traitée et usinée que pour son adaptation au dispositif amovible choisi.

Au moins un doigt est prévu sur le centre d'usinage non amovible qui, en position de montage et de verrouillage du dispositif amovible sur ledit centre d'usinage, se loge dans un évidement pratiqué dans le corps de la cassette.

Ce doigt sert essentiellement pour assurer l'entraînement du dispositif amovible, mais également par sa configuration particulière, pour faciliter le montage de l'ensemble: cassette et dispositif amovible sur le centre d'usinage.

En effet, ledit évidement est cylindrique tandis que la partie dudit doigt qui se loge dans ledit évidement est au moins partiellement réalisée de façon à ce que ses parties latérales cylindriques soient en contact avec la face intérieure dudit évidement, tandis que les parties supérieure et inférieure permettent l'existence d'un faible jeu entre elles et la face intérieure dudit évidement.

Lesdites parties supérieure et inférieure sont réalisées sous forme prismatique.

Le bout dudit doigt est réalisé sous forme d'un cône tronqué.

Le faible jeu permet le déplacement vertical très faible de la cassette lors de l'opération de blocage tout en assurant, lors du montage, la précision et le centrage parfaits de la cassette et du dispositif amovible sur le centre d'usinage.

Selon un mode de réalisation particulier, lesdits organes de blocage sont les coulisseaux servant pour le verrouillage du dispositif amovible en position de fonctionnement, lesdits coulisseaux pouvant se déplacer radialement sous l'action du mécanisme de verrouillage et de déverrouillage.

Pour permettre l'échange rapide et efficace, ladite cassette est pourvue d'une gorge de préhension par le manipulateur, pour le transport de l'ensemble: cassette et dispositif amovible, lors d'une opération d'échange.

Pour être sûr du blocage efficace, lors du montage de la cassette et du dispositif amovible sur le centre d'usinage, un conduit pour l'amenée d'un fluide sous pression est disposé dans le corps de la cassette, ledit conduit aboutissant sur la face inclinée de sa face intérieure et étant en liaison avec une source d'alimentation dudit fluide et, éventuellement, avec un dispositif indicateur, de façon à ce que l'écoulement dudit fluide soit interrompu par le contact parfait et étanche entre ladite face inclinée de la cassette et la face inclinée de l'organe de blocage, l'interruption de cet écoulement étant alors affichée par ledit dispositif indicateur.

D'autres modes de vérification du blocage parfait et précis peuvent être utilisés sans pour autant sortir de l'étendue des revendications.

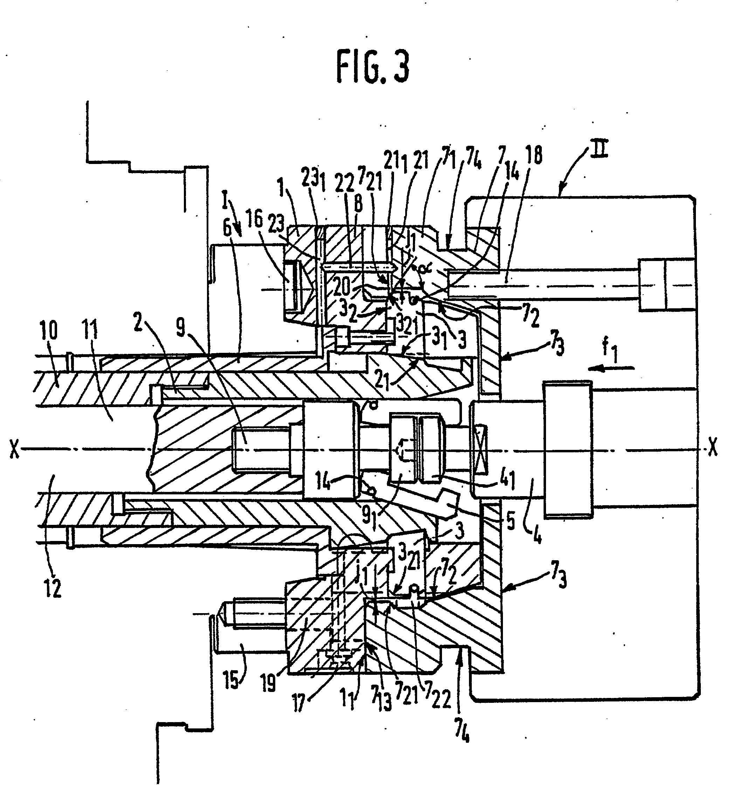

D'autres avantages et caractéristiques ressortiront du texte suivant, donné à titre d'exemple uniquement, et des figures y afférentes; dont la figure 1 montre, en coupe, un mode de réalisation de l'invention; les figures 2a et 2b montrent, en coupe A–A et en vue de côté, ledit doigt d'entraînement, et la figure 3 montre, en coupe, le mode de réalisation de la figure 1 avec, en plus, les moyens pneumatiques de contrôle du contact intime et régulier entre les faces inclinées de la cassette et de l'organe de blocage respectivement.

La figure 1 montre un centre d'usinage I amovible comprenant un plateau d'adaptation 1. Ce centre d'usinage I peut être une broche d'une machine-outil ou similaire. Dans l'alésage central de ce centre d'usinage agissent les tirants 10, 11 sur un piston annulaire 2 qui peut y déplacer selon l'axe X–X dans un fourreau 6 et effectue par sa partie inclinée $2_1$, lors de son déplacement longitudinal, le déplacement radial des coulisseaux 3 pour le verrouillage ou le déverrouillage à l'encontre du ressort 14 des mors 5 qui assurent le maintien (ou la libération) de la tête $9_1$ de l'embout 9 du centre d'usinage I et de la tête $4_1$ de l'embout 4 du dispositif amovible II – qui peut être un mandrin de serrage, un porte-outil, etc... Dans la partie supérieure de la figure 1, le mors 5 est montré en position de verrouillage tandis que dans la partie inférieure de la figure 1 le mors 5 est montré en position de déverrouillage: la tête $4_1$ est libre et le dispositif amovible II peut être enlevé pour être remplacé par un autre, par exemple. Un tel système d'accrochage et de décrochage rapide avec verrouillage irréversible est connu au document européen EP-A 0 189 697 au nom de la demanderesse. Dans ce document, les surfaces d'entraînement sont très grandes, d'où imprécision en voile et en concentricité; usure prématurée, donc manque de fiabilité. Egalement, il existe le danger de microcopeaux. En outre, ce document européen appartient à l'état de la technique selon l'article 54 (3) de la CBE.

Le plateau 1 est fixé sur le corps 15 du centre d'usinage I au moyen des vis 19 et positionné au moyen d'au moins un goujon 16. La lubrification du système est assurée par un graisseur 17. Une vis à téton 12 est prévue pour délimiter le déplacement radial de chaque coulisseau 8, lors du verrouillage et du déverrouillage des mors 5.

Conformément à l'invention, la liaison entre le centre d'usinage I et le dispositif amovible II s'effectue indirectement par l'intermédiaire d'une cassette 7 dont la face verticale $7_3$ n'est traitée qu'en fonction du genre dispositif amovible II devant être utilisé. La cassette 7, sa face $7_3$ ayant été convenablement traitée et usinée est fixée sur le dispositif amovible II par des vis 18.

L'ensemble: cassette 7 et dispositif amovible II est déplacé le long de l'axe X–X vers la gauche sur les figures 1 et 3, dans le sens de la flèche $f_1$, par exemple par un manipulateur qui saisit ledit ensemble dans une gorge de préhension $7_4$ usinée dans le corps 1 de la cassette 7. Cet ensemble est déplacé jusqu'à ce que la face postérieure: $7_{13}$ du corps $7_1$ de la cassette 7 entre en contact avec la face antérieure $1_1$ du plateau 1, au moins un doigt 8 ayant pénétré dans un évidement $7_5$ pratiqué dans la partie postérieure du corps $7_1$ de la cassette 7, un jeu $j_1$ existant entre la cassette 7 et le centre d'usinage I lors du montage.

Le doigt 8 sert essentiellement pour l'entraînement du dispositif amovible II, mais également pour le positionnement correct de ce dispositif II. La configuration du doigt 8 est montrée sur les figures 2a et 2b. Il comporte une partie arrière cylindrique 8 qui est montée fixe, par exemple au moyen d'une vis dans le plateau 1; et l'extrémité avant $8_2$ est réalisée par exemple sous forme d'un cône tronqué, l'angle de conicité étant de 25° à 35°. Entre l'extrémité $8_2$ et la partie arrière $8_1$, une partie médiane $8_3$ est conformée de façon à ce que ces parties latérales $8_{33}$ soient cylindriques de façon à être toujours en contact avec la face intérieure de l'évidement $7_5$, tan-

dis que les parties supérieure $8_{31}$ et inférieure $8_{32}$ ont une forme prismatique; ces parties supérieure et inférieure $8_{31}$ et $8_{32}$ ne sont pas en contact avec la face inférieure de l'évidement $7_5$, mais un faible jeu »j« subsiste.

Ce faible jeu $j_2$ permet l'introduction facile et précise du doigt 8 dans l'évidement $7_5$ sans risque de dommages ou heurts, et le blocage de la cassette 7, et donc du dispositif amovible II, par le déplacement radial vers l'extérieur des coulisseaux 3 sans que se produise un coincement ou un empêchement quelconque, comme il sera précisé plus loin.

L'inclinaison γ de plans des prismes $8_{31}$ et $8_{33}$ est de l'ordre de 20° à 30°.

D'autres modes de réalisation du doigt 8 peuvent être envisagés sans pour autant sortir du cadre de l'invention.

Pour bloquer la cassette et le dispositif II positionnés (voir la partie inférieure de la figure 1), il suffit de faire avancer le piston 2; la partie inclinée $2_1$ du piston 2 déplace les coulisseau 3 radialement ver l'extérieur en agissant sur la face inclinée $3_1$ des coulisseaux jusqu'à ce que la face inclinée $3_{21}$ de la partie supérieure $3_2$ des coulisseaux vienne en contact intime avec la face $7_{21}$ de la face intérieure $7_2$ de la cassette 7. L'inclinaison des faces $3_{21}$ et $7_{21}$ est identique. Dans l'exemple montré dans les dessins, l'inclinaison α est égale à 45°. Lors du blocage, la cassette peut être poussée vers l'extérieur. Ceci peut se produire sans difficulté et sans causer de dommages grâce au jeu »j«. La partie supérieure $3_2$ peut alors se loger dans la gorge $7_{22}$ sur la face $7_2$ de la cassette 7, (voir partie supérieure de la figure 1).

La précision de montage de la cassette 7 dans le centre d'usinage I par rapport à l'axe longitudinal X–X, de la face $7_3$ et le diamètre D extérieur de la cassette 7 est de l'ordre de 0,001 mm.

En outre, le jeu de montage $j_1$ entre la cassette 7 et le centre d'usinage I subsiste après l'opération de blocage, permettant ainsi le placage et le centrage précis de la cassette 7 sur ledit centre d'usinage I. Ce jeu $j_1$ a une valeur de 0,5 à 1 mm au diamètre d intérieur de la gorge $7_{22}$ de la cassette 7.

Pour pouvoir s'assurer du bon fonctionnement du blocage, il est essentiel de pouvoir vérifier que le contact entre les faces $3_{21}$ et $7_{21}$ est parfait. Un mode simple et efficace consiste à faire aboutir sur la face $7_{21}$ un conduit 20 qui est relié par les conduites 22, 23 à une source d'alimentation d'un fluide sous pression. Les conduits 21 et 23 sont fermés de façon étanche par les bouchons $21_1$ et $23_1$. La conduite 20 peut également être reliée à un dispositif indicageur d'arrêt d'écoulement du fluide sous pression lorsque le contact de blocage entre les faces $7_{21}$ et $3_{21}$ est parfait.

De nombreux perfectionnements et améliorations peuvent être apportés sans pour autant sortir de l'étendue des revendications.

## Revendications

1. Système d'échange sur un centre d'usinage non amovible des dispositifs amovibles de serrage et/ou de maintien amovibles que des mandrins, porte-outils et similaires, comprenant:
   – un plateau d'adaptation (1) pour être fixé sur ledit centre d'usinage (I)
   – une cassette (7) pour être fixée sur ledit dispositif amovible (II) dont le côté intérieur (7.2) présente une face inclinée (7.21) par rapport à l'axe longitudinal (x–x) du système,
   – au moins un organe de blocage (3) avec une face inclinée (3.21) correspondant à ladite face inclinée (3.21) de la cassette, chaque organe de blocage étant déplaçable radialement à partir d'une position neutre vers la position de blocage lors de l'opération de montage et de verrouillage dudit dispositif amovible (II) sur ledit centre d'usinage (I),
   – des mors (5) servant le verrouillage et déverrouillage de la tête (4.1) d'un moyen de commande de serrage et de desserrage (4) dudit dispositif amovible (II) avec la tête (9.1) d'un tirant (11) dudit centre d'usinage (I),
   – un piston annulaire (2) étant pourvu sur sa face extérieure et sur sa face intérieure respectivement d'une partie conique (2.1) pour verrouiller et déverrouiller lors de son déplacement axial respectivement simultanément lesdites têtes (4.1, 9.1) par l'intermédiaire desdits mors (5) d'une part, et ladite cassette (7) et le plateau d'adaptation (1) par l'intermédiaire du ou desdits organe(s) (3) déplaçables radialement d'autre part,
   – des moyens de contrôle du contact intime et régulier entre lesdites faces inclinées (3.21, 7.21) du ou desdits organe(s) de blocage (3) et de ladite cassette (7) étant prévus pour l'action de blocage.

2. Système selon la revendication 1, caractérisé en ce que l'inclinaison de la totalité desdites faces (3.21, 7.21) est identique.

3. Système selon l'une des revendications 1 ou 2, caractérisé en ce que ladite inclinaison est de 40° à 50°.

4. Système selon la revendication 3, caractérisé en ce que ladite inclinaison est de 45°.

5. Système selon l'une des revendications précédentes, caractérisé en ce qu'un jeu (j.1) existe lors du montage de l'ensemble: cassette (7) et dispositif amovible (II) sur/ou dans ledit centre d'usinage (I) et subsiste après le blocage par lesdits organes (3) assurant ainsi le montage facile dudit ensemble sur/ou dans ledit centre d'usinage (I) et, en position de blocage, le placage et le centrage précis de ladite cassette (7) sur ledit centre d'usinage (I).

6. Système selon la revendication 5, caractérisé en ce que ledit jeu (j.1) est 0,5 à 1,0 mm au diamètre (d) intérieur de la cassette (7).

7. Système selon l'une des revendications 5 ou 6, caractérisé en ce que la précision dudit placage et centrage de la cassette (7) sur/ou dans ledit centre d'usinage (I), en position de blocage, est 0,007 à 0,011 mm par rapport à l'axe longitudinal X–X de la face (7.3) de la cassette (7) et son diamètre extérieur D.

8. Système selon l'une des revendications précédentes, caractérisé en ce que la face (7.3) de la cassette (7) destinée à être en contact avec le dispositif amovible n'est traitée et usinée que pour son adaptation au dispositif amovible choisi.

9. Système selon l'une des revendications précédentes, caractérisé en ce qu'au moins un doigt (8) est prévu sur le centre d'usinage non amovible (I) qui, en position de montage et de verrouillage du dispositif amovible (II) sur ledit centre d'usinage se loge dans un évidement (7.5) pratiqué dans le corps (7.1) de la cassette (7).

10. Système selon la revendication 8, caractérisé en ce que ledit évidement (7.5) est cylindrique tandis que la partie (8.2, 8.3) dudit doigt (8) qui se loge dans ledit évidement (7.5) est au moins partiellement réalisée de façon à ce que ses parties latérales cylindriques (8.33) soient en contact avec la face intérieure dudit évidement (7.5), tandis que les parties supérieure (8.31) et inférieure (8.32) permettent l'existence d'un faible jeu (j) entre elles et la face inférieure dudit évidement (7.5).

11. Système selon la revendication 10, caractérisé en ce que lesdites parties supérieure (8.31) et inférieure (8.32) sont réalisées sous forme prismatique.

12. Système selon l'une des revendications 10 ou 11, caractérisé en ce que le bout (8.2) dudit doigt est réalisé sous forme d'un cône tronqué.

13. Système selon l'une des revendications précédentes, caractérisé en ce que lesdits organes de blocage (3) sont les coulisseaux servant pour le verrouillage du dispositif amovible en position de fonctionnement, lesdits coulisseaux (3) pouvant se déplacer radialement sous l'action du mécanisme de verrouillage et de déverrouillage.

14. Système selon l'une des revendications précédentes, caractérisé en ce que ladite cassette (7) est pourvue d'une gorge (7.4) de préhension par le manipulateur, pour le transport de l'ensemble cassette (7) et le dispositif amovible (II) lors d'une opération d'échange.

15. Système selon l'une des revendications précédentes, caractérisé en ce qu'un conduit (20) pour l'amenée d'un fluide sous pression est disposé dans le corps (7.2) de la cassette (7), ledit conduit aboutissant sur la face inclinée (7.21) de sa face intérieure (7.2) et étant en liaison avec une source d'alimentation dudit fluide et, éventuellement, avec un dispositif indicateur, de façon à ce que l'écoulement dudit fluide est interrompu par le contact parfait et étanche entre ladite face inclinée (7.21) de la cassette (7) et la face inclinée (3.21) de l'organe de blocage (3), l'interruption de cet écoulement étant alors affiché par ledit dispositif indicateur.

**Patentansprüche**

1. System zum Wechseln von lösbaren Spann- und/oder lösbaren Halteeinrichtungen auf einem Bearbeitungszentrum wie Dornen, Werkzeugträgern und dergleichen, umfassend:
- eine Anpaßplatte (1) zur Befestigung auf diesem Bearbeitungszentrum (I)
- eine Kassette (7) zur Befestigung auf dieser lösbaren Einrichtung (II), deren Innenseite (7.2) eine Fläche aufweist, die geneigt (7.21) bezüglich der Längsachse (x–x) des Systems ist,
- wenigstens ein Blockierorgan (3) mit einer geneigten Fläche (3.21) entsprechend dieser geneigten Fläche (7.21) der Kassette, wobei jedes Blockierorgan radial aus einer neutralen Stellung gegen die Blockierstellung beim Montage- und Verriegelungsvorgang dieser lösbaren Einrichtung (II) auf diesem Bearbeitungszentrum (I) verschiebbar ist,
- Backen (5), die zur Verriegelung und Entriegelung des Kopfes (4.1) einer Spann- und Entspannsteuereinrichtung (4) dieser lösbaren Einrichtung (II) mit dem Kopf (9.1) eines Ankers (11) dieses Bearbeitungszentrums (I) dienen,
- wobei ein Ringkolben (2) auf der Außenfläche und der Innenfläche jeweils eines konischen Teils (2.1) vorgesehen ist, um bei seiner Axialverschiebung jeweils gleichzeitig diese Köpfe (4.1, 9.1) vermittels dieser Backen (5) einerseits und diese Kassette (7) und die Anpaßplatte (1) vermittels des oder der radial verschiebbaren Organe (3) andererseits zu verriegeln und entriegeln,
- und wobei Einrichtungen zur Regelung des innigen und regelmäßigen Kontakes zwischen diesen geneigten Flächen (3.21, 7.21) des oder der Blockierorgane (3) und der Kassette (7) für die Blockierwirkung vorgesehen sind.

2. System nach Anspruch 1, dadurch gekennzeichnet, daß die Neigung der Gesamtheit dieser Flächen (3.21, 7.21) gleich ist.

3. System nach einem der Ansprüche 1 oder 2, dadurch gekennzeichnet, daß diese Neigung 40° bis 50° beträgt.

4. System nach Anspruch 3, dadurch gekennzeichnet, daß diese Neigung 45° beträgt.

5. System nach einem der vorhergehenden Ansprüche, dadurch gekennzeichnet, daß ein Spiel (j.1) bei der Montage der Anordnung Kassette (7) und lösbare Einrichtung (II) auf oder in diesem Bearbeitungszentrum (I) existiert und nach Blockieren durch diese Organe (3) verbleibt und so die leichte Montage dieser Anordnung auf oder in diesem Bearbeitungszentrum (I) sicherstellt und in Blockierstellung das Drücken und Präzisionszentrieren dieser Kassette (7) auf diesem Bearbeitungszentrum (I) ermöglicht.

6. System nach Anspruch 5, dadurch gekennzeichnet, daß das Spiel (j.1) 0,5 bis 1,0 mm zum Innendurchmesser (d) der Kassette (7) ist.

7. System nach einem der Ansprüche 5 oder 6, dadurch gekennzeichnet, daß die Genauigkeit dieses Andrückens und Zentrierens der Kassette (7) auf oder in diesem Bearbeitungszentrum (I) in Blockierstellung 0,007 bis 0,011 mm bezogen auf die Längsachse X–X der Fläche (7.3) der Kassette (7) und ihres Außendurchmessers D beträgt.

8. System nach einem der vorhergehenden Ansprüche, dadurch gekennzeichnet, daß die Fläche (7.3) der Kassette (7) die dazu bestimmt ist, in Kontakt mit der lösbaren Einrichtung zu treten, nur zu ihrer Anpassung an die gewählte lösbare Einrichtung behandelt und bearbeitet wird.

9. System nach einem der vorhergehenden Ansprüche, dadurch gekennzeichnet, daß wenigstens ein Finger (8) auf dem nicht lösbaren (I) Bearbeitungszentrum vorgesehen ist, der in Montage- und Verriegelungsstellung der lösbaren Einrichtung (II) auf diesem Bearbeitungszentrum sich in einer Ausnehmung (7.5) lagert, die in dem Körper (7.1) der Kassette (7) ausgespart ist.

10. System nach Anspruch 8, dadurch gekennzeichnet, daß diese Ausnehmung (7.5) zylindrisch ist, während der Teil (8.2, 8.3) dieses Fingers (8), der in dieser Ausnehmung (7.5) lagert, wenigstens teilweise derart realisiert ist, daß seine seitlichen zylindrischen Teile (8.33) in Kontakt mit der Innenfläche dieser Ausnehmung (7.5) sind, während die oberen (8.31) und unteren (8.32) Teile die Existenz eines geringen Spiels (j) zwischen sich und der Unterseite dieser Ausnehmung (7.5) ermöglichen.

11. System nach Anspruch 10, dadurch gekennzeichnet, daß diese oberen (8.31) und unteren (8.32) Teile in prismatischer Gestalt realisiert sind.

12. System nach einem der Ansprüche 10 oder 11, dadurch gekennzeichnet, daß das Ende (8.2) dieses Fingers in Form eines Kegelstumpfes ausgebildet ist.

13. System nach einem der vorhergehenden Ansprüche, dadurch gekennzeichnet, daß diese Blockierorgane (3) Kulissen sind, die zur Verriegelung der lösbaren Einrichtung in Funktionsstellung dienen, wobei diese Kulissen (3) sich radial unter der Wirkung des Verriegelungs- und Entriegelungsmechanismus verschieben können.

14. System nach einem der vorhergehenden Ansprüche, dadurch gekennzeichnet, daß diese Kassette (7) mit einer Nut (7.4) zum Erfassen durch den Manipulator für den Transport der Kassettenanordnung (7) und der lösbaren Einrichtung (2) bei einem Austauschvorgang vorgesehen ist.

15. System nach einem der vorhergehenden Ansprüche, dadurch gekennzeichnet, daß eine Leitung (20) zur Zuführung eines Fluids unter Druck im Körper (7.2) der Kassette (7) angeordnet ist, wobei diese Leitung gegen die geneigte Fläche (7.21) der Innenseite (7.2) mündet und in Verbindung mit einer Speisequelle für dieses Fluid und gegebenenfalls einer Anzeigeeinrichtung derart steht, daß die Strömung dieses Fluids durch den vollkommenen und dichten Kontakt zwischen dieser geneigten Fläche (7.21) der Kassette (7) und der geneigten Fläche (3.21) des Blockierorgans unterbrochen wird, wobei die Unterbrechung dieser Strömung dann durch diese Anzeigeeinrichtung angezeigt wird.

**Claims**

1. Exchange system on a non removable working centre for removable clamping and/or removable holding devices, such as mandrels, tool holders and similar, comprising:
- an adapter plate (1) to be fixed on said working centre (I),
- a cassette (7) to be fixed on said removable device (II) whose inner side (7.2) has a face (7.1) slanting with respect to the longitudinal axis (x–x) of the system,
- at least one locking member (3) with a slanting face (3.21) corresponding to said slanting face (7.21) of the cassette, each locking member being movable radially from a neutral position to the locking position during the operation for fitting said removable device (II) and locking it on said working centre (I),
- jaws (5) for locking and unlocking the head (4.1), of means for controlling clamping and unclamping (4) of said removable device (II), with the head (9.1) of a tie-rod (11) of said working centre,
- an annular piston (2) being provided on its external face and its internal face respectively with a conical portion (2.1) for locking and unlocking, during its axial movement, respectively simultaneously said heads (4.1, 9.1) by means of said jaws (5), on the one hand, and said cassette (7) and the adapter plate (1) by means of said radially movable member(s) (3) on the other,
- means for checking the intimate and even contact between said slanting faces (3.21, 7.21) of said locking member(s) (32) and said cassette (7) being provided for the locking action.

2. System according to claim 1, characterized in that the slant of the whole of said faces (3.21, 7.21) is identical.

3. System according to one of claims 1 or 2, characterized in that said slant is from 40° to 50°.

4. System according to claim 3, characterized in that said slant is 45°.

5. System according to one of the preceding claims, characterized in that a clearance (j.1) exists during fitting of the assembly: cassette (7) and removable device (II) on/or in said working centre (I) and exists after locking by said members (3), thus ensuring ready fitting of said assembly on/or in said working centre (I) and, in the locked position, precise application and centring of said cassette (7) on said working centre (I).

6. System according to claim 5, characterized in that said clearance (j.1) is from 0.5 to 1.0 mm at the inner diameter (d) of the cassette (7).

7. System according to one of claims 5 or 6, characterized in that the accuracy of said application and centring of the cassette (7) on/or in said working centre (I), in the locked position, is from 0.007 to 0.011 mm with respect to the longitudinal axis x–x of the face (7.3) of the cassette (7) and its external diameter (D).

8. System according to one of the preceding claims, characterized in that the face (7.3) of the cassette (7) intended to be in contact with the removable device is treated and machined only for fitting it to the chosen removable device.

9. System according to one of the preceding claims, characterized in that at least one finger (8) is provided on the non removable working centre (I) which, in the fitted and locked position of the removable device (II) on said working centre, is housed in a recess (7.5) formed in the body (7.1) of the cassette (7).

10. System according to claim 8, characterized in that said recess (7.5) is cylindrical whereas the portion (8.2, 8.3) of said finger (8) which is housed in said recess (7.5) is at least partially formed so that its cylindrical lateral portions (8.33) are in contact with the inner face of said recess (7.5), whereas the upper (8.31) and lower (8.32) portions allow the existence of a small cylindrical clearance (j) between them and the lower face of said recess (7.5).

11. System according to claim 10, characterized in that said upper (8.31) and lower (8.32) portions are given a prismatic shape.

12. System according to one of claims 10 or 11, characterized in that the end (8.2) of said finger is in the form of a truncated cone.

13. System according to one of the preceding claims, characterized in that said locking members (3) are slides for locking the removable device in the operating position, said slides (3) being movable radially under the action of the locking and unlocking mechanism.

14. System according to one of the preceding claims, characterized in that said cassette (7) is provided with a groove (7.4) gripped by the manipulator for transporting the cassette (7) and removable device (II) assembly during an exchange operation.

15. System according to one of the preceding claims, characterized in that a duct (20) for supplying a pressurized fluid is disposed in the body (7.2) of the cassette (7), said duct ending at the slanting face (7.21) of its inner face (7.2) and being connected to a source supplying said fluid and, possibly, with an indicator device so that the flow of said fluid is interrupted by the perfect and sealing contact between said slanting face (7.21) and the oassette (7) and the slanting face (3.21) of the locking member (3), the interruption of this flow then being displayed by said indicator device.

# FIG.1

# FIG 2a

# FIG.2b

# FIG. 3